# EUROPÄISCHE PATENTANMELDUNG

(11) **EP 2 887 095 A2**
(43) Veröffentlichungstag der Anmeldung: **24.06.2015**
(21) Anmeldenummer: 14197673.8
(22) Anmeldetag: 12.12.2014
(51) Int. Cl.: G01S 15/93, G01S 7/00, G01S 7/52

(54) **Verfahren zum Betreiben eines Steuergeräts eines Sensorsystems eines Kraftfahrzeugs, Steuergerät, Sensorsystem und Kraftfahrzeug**

(30) Priorität: 17.12.2013 DE 102013021325
(71) Anmelder: Valeo Schalter und Sensoren GmbH, 74321 Bietigheim-Bissingen (DE)
(72) Erfinder: Hallek, Michael, 74321 Bietigheim-Bissingen (DE)

(57) **Zusammenfassung**

Verfahren zum Betreiben eines Steuergeräts (3) eines Sensorsystems (2) eines Kraftfahrzeugs (1), bei welchem das Steuergerät (3) mit zumindest zwei Sensoren (4, 5) kommuniziert, welche zur auf gleicher Signalart basierenden Umfelderfassung ausgebildet sind und welche an unterschiedlichen Positionen (P1 bis P6) an und/oder in dem Kraftfahrzeug (1) verbaut und aus mehreren möglichen Sensortypen ausgewählt sind. Es wird eine Anforderungsnachricht von dem Steuergerät (3) an zumindest einen der Sensoren (4, 5) übermittelt und der Sensor (4, 5) dazu aufgefordert, eine Information über den Sensortyp (T1) des Sensors (4, 5) an das Steuergerät (3) zu übermitteln. Die Information über den Sensortyp (T1) des Sensors (4, 5) wird durch das Steuergerät (3) empfangen und mit einem im Steuergerät (3) spezifisch für die Position (P1 bis P6) dieses Sensors (4, 5) abgelegten Solltyp (A1, A2) verglichen. Ein Fehlersignal (FS) wird durch das Steuergerät (3) erzeugt, falls der empfangene Sensortyp (T1) des Sensors (4, 5) von dem abgelegten Solltyp (A1, A2) abweicht.

## Beschreibung

Die Erfindung betrifft ein Verfahren zum Betreiben eines Steuergeräts eines Sensorsystems eines Kraftfahrzeugs, bei welchem das Steuergerät mit zumindest zwei Sensoren kommuniziert, welche zur auf gleicher Signalart basierenden Umfelderfassung ausgebildet sind und welche an unterschiedlichen Positionen an und/oder in dem Kraftfahrzeug verbaut und aus mehreren möglichen Sensortypen ausgewählt sind. Die Erfindung betrifft außerdem ein Steuergerät, welches zum Durchführen eines derartigen Verfahrens ausgebildet ist, sowie ein Sensorsystem mit einem solchen Steuergerät und ein Kraftfahrzeug mit einem Sensorsystem.

Ultraschallsensoren für Kraftfahrzeuge sind bereits aus dem Stand der Technik in vielfältiger Ausgestaltung bekannt. Sie werden üblicherweise zum Unterstützen des Fahrers beim Manövrieren des Kraftfahrzeugs eingesetzt, insbesondere beim Durchführen von Parkvorgängen. Mittels der Ultraschallsensoren werden dabei Abstände zu Hindernissen gemessen, die sich in der Umgebung des Kraftfahrzeugs befinden. Die Ultraschallsensoren gehören hier zu einer Fahrerassistenzeinrichtung, welche als Parkhilfe bezeichnet wird. Jedoch werden Ultraschallsensoren heutzutage auch immer häufiger außerhalb dieser eigentlichen Parkhilfefunktionalität eingesetzt, wie beispielsweise zur Fahrunterstützung mit aktiven Bremseingriffen, d.h. bei automatischen Bremsassistenzsystemen, bei Systemen zur Totwinkelüberwachung, bei Systemen zur Abstandshaltung, bei Kollisionserkennungssystemen und dergleichen.

Ultraschallsensoren arbeiten nach dem Echolaufzeitprinzip: Die Abstandsmessung erfolgt in der Ultraschalltechnologie mittels eines Echolaufzeitverfahrens bzw. Echolotverfahrens. Der Ultraschallsensor sendet ein Sendesignal - Ultraschall - aus und empfängt ein Empfangssignal, das ebenfalls ein Schallsignal ist und einem Signalanteil des ausgesendeten und an einem Hindernis reflektierten Sendesignals entspricht. Es werden also Ultraschallwellen ausgesendet, von einem Objekt reflektiert und wieder durch denselben Ultraschallsensor und/oder einen benachbarten Ultraschallsensor desselben Kraftfahrzeugs empfangen und ausgewertet. In Abhängigkeit von der gemessenen Laufzeit der Ultraschallwelle wird dann der Abstand und gegebenenfalls auch die relative Position und/oder eine Relativgeschwindigkeit relativ zum Kraftfahrzeug bestimmt.

Ein Verfahren zur Feststellung der Authentizität eines Sensors ist aus dem Dokument DE 103 60 120 B3 bekannt. In einem Motorsteuergerät sowie dem Sensor ist jeweils ein identischer Seriennummernsatz abgelegt, welcher mit einer herkömmlichen TAN-Liste vergleichbar ist, wie sie beispielsweise bei Internet-Banking verwendet wird. Der Seriennummernsatz enthält Positionsnummern einerseits sowie zugeordnete Seriennummern andererseits. Das Motorsteuergerät übermittelt dabei eine Anfrage bezüglich einer Seriennummer aus dem Seriennummernsatz an den Sensor, welcher mit einer zu der Anfrage korrespondierenden Antwort antwortet. Der Sensor wird nur dann authentifiziert, wenn die Antwort der erwarteten Seriennummer entspricht.

Die Erfindung geht von einem anderen Problem aus: Wie bereits ausgeführt, werden Ultraschallsensoren heutzutage auch außerhalb der eigentlichen Parkhilfeanwendung eingesetzt. Ein Kraftfahrzeug kann sowohl über Ultraschallsensoren verfügen, welche für die herkömmliche Einparkhilfe eingesetzt werden (insbesondere zur Detektion von Hindernissen und zur Abstandsmessung, wobei die gemessenen Abstände dem Fahrer signalisiert werden) und beispielsweise am vorderen und hinteren Stoßfänger angeordnet sind, als auch über Ultraschallsensoren, welche an den jeweiligen Seitenflanken des Fahrzeugs verbaut sind und zur Vermessung von Parklücken bei einem Parkassistenzsystem verwendet werden. Für die unterschiedlichen Fahrerassistenzanwendungen müssen dabei unterschiedliche Sensortypen eingesetzt werden, die sich hinsichtlich ihrer Erfassungsbereiche untereinander unterscheiden. So wird für die Parklückenvermessung üblicherweise ein Ultraschallsensor mit einem relativ schmalen Erfassungswinkel bzw. Öffnungswinkel und mit einer relativ großen Reichweite eingesetzt. Für die Parkhilfeanwendung hingegen werden Ultraschallsensoren verwendet, welche einen relativ breiten Erfassungswinkel aufweisen. Bei der Fahrzeugausrüstung bzw. Fahrzeugauslieferung besitzen die unterschiedlichen Sensoren zwar eine Codierung im Stecker, es kann jedoch bei Reparaturfällen - etwa in einer Werkstatt - durchaus vorkommen, dass an einer bestimmten Position, an welcher bestimmungsgemäß ein Sensor eines bestimmten Sensortyps verbaut werden soll, tatsächlich ein Sensor eines anderen Sensortyps verbaut wird. Ein falscher Verbau hinsichtlich der Positionszuordnung kann grundlegende funktionale Auswirkungen auf das gesamte Sensorsystem haben. Wird beispielsweise ein Ultraschallsensor mit einem breiten Erfassungswinkel an derjenigen Position verbaut, an welcher bestimmungsgemäß ein Sensor mit einem schmalen Öffnungswinkel positioniert werden soll, so können die Parklücken nicht präzise detektiert werden. Dies beeinflusst dann die Zuverlässigkeit der Parkassistenzanwendung. Wird wiederum ein Ultraschallsensor mit einem schmalen Öffnungswinkel an der Position eines Sensors mit breitem Öffnungswinkel verbaut, so können schmale Objekte, beispielsweise in Form eines dünnen Rohrs oder Pfostens, bei der Parkhilfeanwendung nicht detektiert werden. Dies führt dazu, dass beispielsweise keine akustischen Warnsignale durch die Parkhilfeanwendung ausgegeben werden, obwohl sich in der Umgebung des Kraftfahrzeugs tatsächlich ein Hindernis befindet.

Es ist Aufgabe der Erfindung, einen Weg aufzuzeigen, wie bei einem Verfahren der eingangs genannten Gattung ein falscher Verbau der Sensoren hinsichtlich der Positionszuordnung zuverlässig detektiert und gegebenenfalls entsprechende Sicherheitsmaßnahmen getroffen werden können.

Diese Aufgabe wird erfindungsgemäß durch ein Verfahren, durch ein Steuergerät, durch ein Sensorsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben eines Steuergeräts eines Sensorsystems eines Kraftfahrzeugs. Das Steuergerät kommuniziert mit zumindest zwei Sensoren, welche zur Umfelderfassung auf der Basis gleicher Signalart ausgebildet sind. Unter der "Signalart" wird dabei die Art eines Sendesignals verstanden, welches durch den jeweiligen Sensors zur Umfelderfassung ausgesendet wird. Die Sensoren können dabei beispielsweise Ultraschallsensoren sein. Die Sensoren sind an unterschiedlichen Positionen an und/oder in dem Kraftfahrzeug verbaut und aus mehreren möglichen Sensortypen ausgewählt. Das Steuergerät übermittelt an zumindest einen der Sensoren eine Anforderungsnachricht, durch welche dieser Sensor dazu aufgefordert wird, eine Information über seinen Sensortyp an das Steuergerät zu übermitteln. Das Steuergerät empfängt dann die Information über den Sensortyp des Sensors und vergleicht den empfangenen Sensortyp mit einem Solltyp, welcher in dem Steuergerät spezifisch für die Position dieses Sensors abgelegt ist. Falls der empfangene Sensortyp von dem abgelegten Solltyp abweicht, wird durch das Steuergerät ein Fehlersignal erzeugt.

Demnach wird durch das Steuergerät überprüft, ob an einer bestimmten Position im/am Kraftfahrzeug aktuell ein Sensor des richtigen Sensortyps (aus einer Mehrzahl von möglichen Sensortypen) verbaut ist. Auf diese Art und Weise kann das Steuergerät feststellen, dass an einer bestimmten Position ein Sensor des falschen Sensortyps verbaut ist, und kann gegebenenfalls entsprechende Sicherheitsmaßnahmen treffen. Es können somit beispielsweise Situationen verhindert werden, in denen zur Vermessung von Parklücken ein Sensor mit einem breiten Erfassungswinkel und einer geringen Reichweite verwendet wird. Und umgekehrt können auch Situationen verhindert werden, bei denen für die Anwendung einer herkömmlichen Einparkhilfe Ultraschallsensoren verwendet werden, welche einen schmalen Erfassungswinkel aufweisen.

Bevorzugt sind die zumindest zwei Sensoren unterschiedlichen Fahrerassistenzanwendungen zugeordnet, welche im Betrieb des Sensorsystems durch das Steuergerät anhand von Messwerten der jeweiligen Sensoren bereitgestellt werden. Unterschiedliche Fahrerassistenzanwendungen setzen dabei unterschiedliche Sensortypen voraus. Eine erste Fahrerassistenzanwendung kann beispielsweise die genannte Einparkhilfe darstellen, bei welcher die gemessenen Abstände dem Fahrer signalisiert werden. Eine zweite Fahrerassistenzanwendung kann beispielsweise die Vermessung von Parklücken mit einer anschließenden Berechnung einer geeigneten Parkbahn beinhalten, entlang welcher das Kraftfahrzeug in die detektierte Parklücke eingeparkt werden kann. Das erfindungsgemäße Verfahren erweist sich gerade bei Sensoren als besonders vorteilhaft, welche unterschiedlichen Fahrerassistenzanwendungen zugeordnet sind, die auch unterschiedliche Sensortypen voraussetzen.

Also sind die zumindest zwei Sensoren aus mehreren möglichen Sensortypen ausgewählt. Die unterschiedlichen Sensortypen können sich dabei insbesondere bezüglich ihrer Erfassungsbereiche untereinander unterscheiden, insbesondere bezüglich ihrer Erfassungswinkel und/oder ihrer Reichweiten. Ergänzend oder alternativ können sich die unterschiedlichen Sensortypen auch bezüglich ihrer Empfangsempfindlichkeit untereinander unterscheiden. Ein erster Sensor kann beispielsweise einen relativ breiten Erfassungswinkel und/oder eine relativ geringe Reichweite aufweisen; ein zweiter Sensor kann einen relativ schmalen Erfassungswinkel und eine relativ große Reichweite aufweisen. Ein Sensor kann auch eine relativ geringe Empfangsempfindlichkeit aufweisen, während ein anderer Sensor eine größere Empfangsempfindlichkeit haben kann. Gerade dann ist es besonders wichtig, dass die entsprechenden Sensoren an der richtigen Stelle am Kraftfahrzeug verbaut werden, da hier ein falscher Verbau hinsichtlich der Positionszuordnung eine große Auswirkung auf die Funktionsweise der jeweiligen Fahrerassistenzanwendung haben kann.

In einer Ausführungsform werden als Sensoren gleicher Signalart beispielsweise Ultraschallsensoren verwendet. Mit Hilfe von Ultraschallsensoren ist es beispielsweise möglich, einerseits Parklücken zu vermessen und andererseits auch Hindernisse zu erfassen und anzuzeigen, die sich sehr nah am Kraftfahrzeug befinden und eine potentielle Gefahr darstellen.

Bevorzugt wird die genannte Anforderungsnachricht an alle Sensoren übermittelt, so dass das Steuergerät von jedem Sensor jeweils eine Information über den jeweiligen Sensortyp empfängt und mit einem im Steuergerät spezifisch für die Position des jeweiligen Sensors abgelegten Solltyp vergleicht. Für jede Sensorposition ist im Steuergerät jeweils der zugeordnete Solltyp abgelegt. Jede Sensorposition kann somit durch das Steuergerät daraufhin überprüft werden, ob in dieser Position aktuell ein Sensor des richtigen Sensortyps (d.h. des Solltyps) verbaut ist.

Das Verfahren lässt sich folgendermaßen ohne viel Aufwand technisch umsetzen: Für die zumindest zwei Sensoren kann das Steuergerät jeweils eine Kommunikationsschnittstelle (physikalischer Kommunikationsanschluss) aufweisen, über welche das Steuergerät über eine zugeordnete Kommunikationsleitung mit dem jeweiligen Sensor kommuniziert. Zu jeder Kommunikationsschnittstelle ist dann jeweils ein Solltyp des Sensors in dem Steuergerät abgelegt. Beispielsweise kann in einem Speicher des Steuergeräts eine Tabelle abgelegt sein, in welcher jeder Kommunikationsschnittstelle des Steuergeräts ein benötigter Solltyp zugeordnet ist. Das Steuergerät kann dann zu jeder Kommunikationsschnittstelle überprüfen, ob an die jeweilige Kommunikationsschnittstelle aktuell ein Sensor des richtigen Sensortyps angeschlossen ist. Diese Ausführungsform kann ohne viel Aufwand implementiert werden.

Die Übermittlung der Anforderungsnachricht an den zumindest einen Sensor wird vorzugsweise wiederholt durchgeführt. Somit kann stets sichergestellt werden, dass die entsprechenden Fahrerassistenzanwendungen ordnungsgemäß funktionieren.

Beispielsweise kann bei jeder Inbetriebnahme des Kraftfahrzeugs, insbesondere bei Aktivieren der Zündung des Kraftfahrzeugs, die Anforderungsnachricht an den zumindest einen Sensor übermittelt werden. Somit kann direkt bei der Fahrzeuginbetriebnahme ein falscher Verbau eines Sensors detektiert werden. Es kann nämlich insbesondere bei Reparaturfällen in einer Werkstatt vorkommen, dass die Sensoren an einer anderen als die vorgesehene Position verbaut werden. Ein solcher Fall kann nun bereits frühzeitig detektiert werden, noch bevor das Kraftfahrzeug gefahren wird.

Wie bereits ausgeführt, wird durch das Steuergerät ein Fehlersignal erzeugt, falls eine Abweichung des empfangenen Sensortyps von dem Solltyp festgestellt wird. Wird durch das Steuergerät jedoch festgestellt, dass der empfangene Sensortyp mit dem abgelegten Solltyp übereinstimmt, so wird durch das Steuergerät vorzugsweise eine Fahrerassistenzanwendung bestimmungsgemäß aktiviert und betrieben, welche im Betrieb des Sensorsystems anhand von Messdaten des Sensors durch das Steuergerät bereitgestellt wird. Bei korrektem Verbau des Sensors wird die zugeordnete Fahrerassistenzanwendung also ordnungsmäßig aktiviert.

Wird hingegen das Fehlersignal erzeugt, so kann mit diesem Fehlersignal beispielsweise eine Ausgabeeinrichtung zur Ausgabe einer Fehlermeldung angesteuert werden. Somit wird der Fahrer des Kraftfahrzeugs auf den falschen Verbau des Sensors hingewiesen. Ergänzend oder alternativ kann auch vorgesehen sein, dass mit dem Fehlersignal die Aktivierung einer anhand von Messdaten des Sensors bereitzustellenden Fahrerassistenzanwendung verhindert oder diese Fahrerassistenzanwendung deaktiviert wird. Somit kann verhindert werden, dass die Fahrerassistenzanwendung fehlerhaft durch das Steuergerät bereitgestellt wird.

Die Erfindung betrifft außerdem ein Steuergerät, welches zum Durchführen eines erfindungsgemäßen Verfahrens ausgebildet ist, sowie ein Sensorsystem mit einem Sensor, insbesondere einem Ultraschallsensor, sowie mit einem solchen Steuergerät.

Ein erfindungsgemäßes Kraftfahrzeug, insbesondere ein Personenkraftwagen, umfasst ein erfindungsgemäßes Sensorsystem.

Die mit Bezug auf das erfindungsgemäße Verfahren vorgestellten bevorzugten Ausführungsformen und deren Vorteile gelten entsprechend für das erfindungsgemäße Steuergerät, das erfindungsgemäße Sensorsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einem Sensorsystem gemäß einer Ausführungsform der Erfindung; und
- Fig. 2: ein Flussdiagramm eines Verfahrens gemäß einer Ausführungsform der Erfindung.

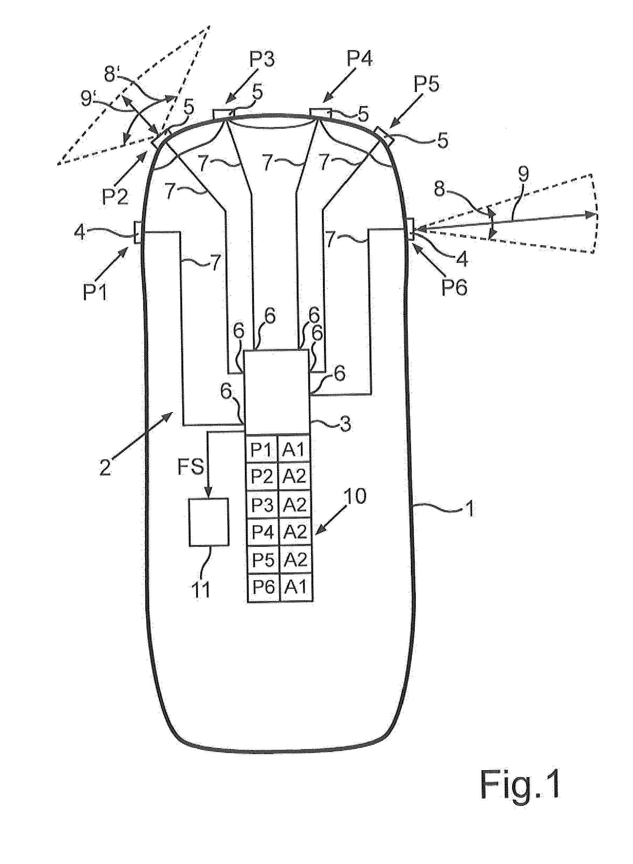

Ein in Fig. 1 dargestelltes Kraftfahrzeug 1 ist beispielsweise ein Personenkraftwagen. Das Kraftfahrzeug 1 umfasst ein Sensorsystem 2, welches ein Steuergerät 3 sowie eine Mehrzahl von Sensoren 4, 5 gleicher Signalart umfasst, im Ausführungsbeispiel Ultraschallsensoren. Für jeden Sensor 4, 5 weist das Steuergerät 3 jeweils eine Kommunikationsschnittstelle 6 auf, d.h. einen Anschluss, über welchen das Steuergerät 3 mit den jeweiligen Sensoren 4, 5 kommuniziert. Jede Kommunikationsschnittstelle 6 ist dabei über eine zugeordnete Kommunikationsleitung 7 mit dem jeweiligen Sensor 4, 5 kommunikationstechnisch gekoppelt. Jeder Sensor 4, 5 ist somit mit dem Steuergerät 3 über eine definierte Kommunikationsleitung 7 fest verdrahtet.

Die Sensoren 4, 5 sind an verschiedenen Positionen P1 bis P6 am Kraftfahrzeug 1 verbaut. An den Positionen P1 und P6 sind bestimmungsgemäß Sensoren 4 verbaut, welche für eine Fahrerassistenzanwendung vorgesehen sind, durch welche Parklücken detektiert werden sollen. Die Sensoren 4 sind Sensoren eines ersten Sensortyps, welcher speziell zur Vermessung der Parklücken konzipiert ist. Die Sensoren 4 weisen dabei einen relativ schmalen Erfassungswinkel 8 sowie eine relativ große Reichweite 9 auf. Die Sensoren 4 sind an den jeweiligen Seitenflanken des Fahrzeugs verbaut.

Dem gegenüber werden die Sensoren 5 an den Positionen P2 bis P5 für eine andere Fahrerassistenzanwendung verwendet, welche als "Einparkhilfe" bezeichnet wird. Diese Sensoren 5 sind Sensoren eines zweiten Sensortyps und dienen zur Detektion von Hindernissen und zur Abstandsmessung, wobei die gemessenen Abstände dem Fahrer signalisiert werden. Gegenüber den Sensoren 4 weisen die Sensoren 5 des zweiten Sensortyps einen relativ breiten Erfassungswinkel 8' und eine geringere Reichweite 9' auf. Sie können sich von den Sensoren 4 auch in der Empfangsempfindlichkeit unterscheiden. Die Sensoren 5 sind am vorderen Stoßfänger angeordnet. Alternativ oder kumulativ können auch Sensoren am hinteren Stoßfänger angeordnet sein.

Da die Sensoren 4, 5 insbesondere Sensoren gleicher Bauweise sind, besteht die Gefahr, dass im Reparaturfall ein Sensor des falschen Sensortyps verbaut wird, d.h. beispielsweise ein Sensor 4 des ersten Sensortyps an einer der Positionen P2 bis P5 oder aber ein Sensor 5 des zweiten Sensortyps an der Position P1 oder P6. Solche Fälle werden durch das Steuergerät 3 detektiert.

Im Ausführungsbeispiel ist in einem Speicher 10 des Steuergeräts 3 eine Tabelle abgelegt, in welcher zu jeder Kommunikationsschnittstelle 6 bzw. zu jeder Sensorposition P1 bis P6 jeweils ein Solltyp A1, A2 für den Sensor zugeordnet ist. Den Positionen P1 und P6 ist dabei der Solltyp A1 zugeordnet, welcher speziell zur Vermessung der Parklücken und somit für die erste Fahrerassistenzanwendung konzipiert ist. Den Positionen P2 bis P5 ist hingegen ein zweiter Solltyp A2 zugeordnet, welcher speziell für die zweite Fahrerassistenzanwendung "Einparkhilfe" vorgesehen ist.

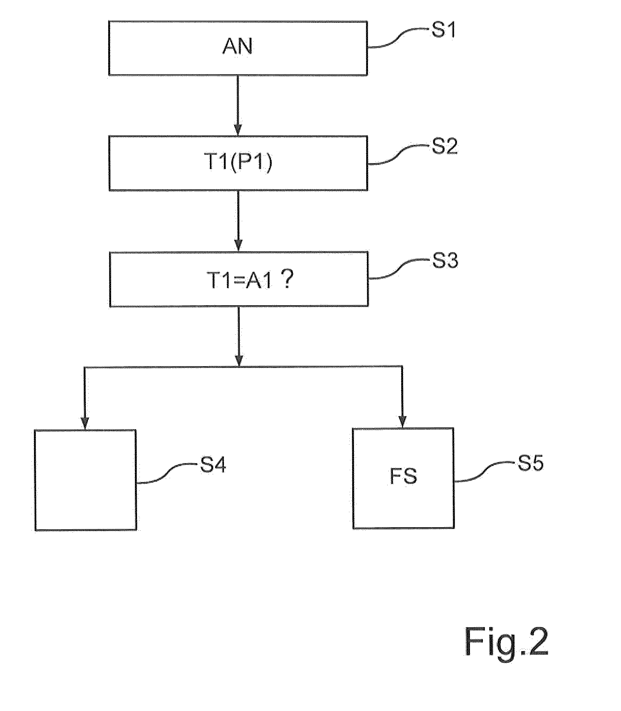

Ein Verfahren gemäß einer Ausführungsform der Erfindung wird nachfolgend unter Bezugnahme auf Fig. 2 näher erläutert. Gemäß Schritt S1 sendet das Steuergerät 3 an zumindest einen der Sensoren 4, 5, insbesondere an alle Sensoren 4, 5, eine Anforderungsnachricht AN, durch welche der jeweilige Sensor 4, 5 dazu aufgefordert wird, dem Steuergerät 3 den Sensortyp mitzuteilen. Der jeweilige Sensortyp ist dabei in den Sensoren 4, 5 dauerhaft abgelegt. Die Anforderungsnachricht AN wird also gezielt für einen oder mehrere Kommunikationsschnittstellen 6 gesendet. In einem weiteren Schritt S2 empfängt das Steuergerät 3 an der entsprechenden Kommunikationsschnittstelle 6 die Information über den Sensortyp des zumindest einen Sensors 4, 5. Beispielsweise empfängt das Steuergerät 3 eine Information über einen Sensortyp T1 an der Position P1 bzw. an der Kommunikationsschnittstelle 6, an welche der an der Position P1 verbaute Sensor 4 angeschlossen ist.

In einem weiteren Schritt S3 vergleicht das Steuergerät 3 den empfangenen Sensortyp T1 für die Position P1 mit dem zur Position P1 abgelegten Solltyp A1. Es sind dann zwei Szenarien möglich: Wird eine Übereinstimmung detektiert, so geht das Verfahren zu einem weiteren Schritt S4 über, in welchem die Messvorgänge mit dem entsprechenden Sensor 4, 5 eingeleitet und hierbei beispielsweise Ultraschallwellen ausgesendet werden. Gemäß Schritt S4 wird also die zugeordnete Fahrerassistenzanwendung bestimmungsgemäß aktiviert. Gegebenenfalls kann das Verfahren gemäß den Schritten S1 bis S3 wiederholt werden, um sicher zu gehen, dass kein Fehler aufgetreten ist.

Wird gemäß Schritt S3 jedoch eine Abweichung festgestellt, so geht das Verfahren zu einem Schritt S5 über, in welchem durch das Steuergerät 3 ein Fehlersignal FS bereitgestellt wird. Mit diesem Fehlersignal FS können verschiedene Vorgänge bewirkt werden: Zum einen ist es möglich, das Aktivieren der dem fehlerhaft verbauten Sensor 4, 5 zugeordneten Fahrerassistenzanwendung zu verhindern bzw. die bereits aktivierte Anwendung zu deaktivieren. Alternativ kann diese Anwendung jedoch auch weiterhin bereitgestellt werden. Dies kann beispielsweise durch den Fahrzeughersteller beliebig implementiert werden. In beiden Fällen kann durch das Fehlersignal FS eine Ausgabeeinrichtung 11 dazu angesteuert werden, eine Fehlermeldung an den Fahrer auszugeben. Der Fahrer wird somit darauf hingewiesen, dass der Sensor 4, 5 an falscher Position P1 bis P6 verbaut wurde.

Das obige Verfahren - und insbesondere die Schritte S1 bis S3 - können bei einer Initialisierung des Sensorsystems 2 (beim Booten) bei jeder Inbetriebnahme des Kraftfahrzeugs 1 durchgeführt werden.

## Patentansprüche

1. Verfahren zum Betreiben eines Steuergeräts (3) eines Sensorsystems (2) eines Kraftfahrzeugs (1), bei welchem das Steuergerät (3) mit zumindest zwei Sensoren (4, 5) kommuniziert, welche zur auf gleicher Signalart basierenden Umfelderfassung ausgebildet sind und welche an unterschiedlichen Positionen (P1 bis P6) an und/oder in dem Kraftfahrzeug (1) verbaut und aus mehreren möglichen Sensortypen ausgewählt sind,
**gekennzeichnet durch**
- Übermitteln einer Anforderungsnachricht (AN) von dem Steuergerät (3) an zumindest einen der Sensoren (4, 5), wobei **durch** die Anforderungsnachricht (AN) der Sensor (4, 5) dazu aufgefordert wird, eine Information über den Sensortyp (T1) des Sensors (4, 5) an das Steuergerät (3) zu übermitteln,
- Empfangen der Information über den Sensortyp (T1) des Sensors (4, 5) und Vergleichen des empfangenen Sensortyps (T1) mit einem im Steuergerät (3) spezifisch für die Position (P1 bis P6) dieses Sensors (4, 5) abgelegten Solltyp (A1, A2) **durch** das Steuergerät (3) und
- Erzeugen eines Fehlersignals (FS) **durch** das Steuergerät (3), falls der empfangene Sensortyp (T1) des Sensors (4, 5) von dem abgelegten Solltyp (A1, A2) abweicht.

2. Verfahren nach Anspruch 1,
**dadurch gekennzeichnet, dass**
die zumindest zwei Sensoren (4, 5) unterschiedlichen Fahrerassistenzanwendungen zugeordnet sind, welche im Betrieb des Sensorsystems (2) durch das Steuergerät (3) anhand von Messdaten der jeweiligen Sensoren (4, 5) bereitgestellt werden.

3. Verfahren nach Anspruch 1 oder 2,
**dadurch gekennzeichnet, dass**
sich die unterschiedlichen Sensortypen bezüglich ihrer Erfassungsbereiche, insbesondere ihrer Ertassungswinkel (8, 8') und/oder ihrer Reichweiten (9, 9'), und/oder bezüglich ihrer Empfangsempfindlichkeit untereinander unterscheiden.

4. Verfahren nach einem der vorhergehenden Ansprüche,
**dadurch gekennzeichnet, dass**
als die Sensoren (4, 5) gleicher Signalart Ultraschallsensoren verwendet werden.

5. Verfahren nach einem der vorhergehenden Ansprüche,
**dadurch gekennzeichnet, dass**
die Anforderungsnachricht (AN) an alle Sensoren (4, 5) übermittelt wird und das Steuergerät (3) von jedem Sensor (4, 5) jeweils eine Information über den jeweiligen Sensortyp (T1) empfängt und mit einem im Steuergerät (3) spezifisch für die Position (P1 bis P6) des jeweiligen Sensors (4, 5) abgelegten Solltyp (A1, A2) vergleicht.

6. Verfahren nach einem der vorhergehenden Ansprüche,
**dadurch gekennzeichnet, dass**
für die zumindest zwei Sensoren (4, 5) das Steuergerät (3) jeweils eine Kommunikationsschnittstelle (6) aufweist, über welche das Steuergerät (3) über eine zugeordnete Kommunikationsleitung (7) mit dem jeweiligen Sensor (4, 5) kommuniziert, wobei zu jeder Kommunikationsschnittstelle (6) jeweils ein Solltyp (A1, A2) des Sensors (4, 5) in dem Steuergerät (3) abgelegt ist.

7. Verfahren nach einem der vorhergehenden Ansprüche,
**dadurch gekennzeichnet, dass**
das Übermitteln der Anforderungsnachricht (AN) an den zumindest einen Sensor (4, 5) wiederholt erfolgt.

8. Verfahren nach einem der vorhergehenden Ansprüche,
**dadurch gekennzeichnet, dass**
bei jeder Inbetriebnahme des Kraftfahrzeugs (1), insbesondere bei Aktivieren einer Zündung des Kraftfahrzeugs (1), die Anforderungsnachricht (AN) an den zumindest einen Sensor (4, 5) übermittelt wird.

9. Verfahren nach einem der vorhergehenden Ansprüche,
**dadurch gekennzeichnet, dass**
falls der empfangene Sensortyp (T1) des Sensors (4, 5) mit dem abgelegten Solltyp (A1, A2) übereinstimmt, durch das Steuergerät (3) eine Fahrerassistenzanwendung aktiviert wird, welche im Betrieb des Sensorsystems (2) anhand von Messdaten des Sensors (4, 5) durch das Steuergerät (3) bereitgestellt wird.

10. Verfahren nach einem der vorhergehenden Ansprüche,
**dadurch gekennzeichnet, dass**
mit dem Fehlersignal (FS):
- eine Ausgabeeinrichtung (11) zur Ausgabe einer Fehlermeldung angesteuert wird und/oder
- die Aktivierung einer anhand von Messdaten des Sensors (4, 5) bereitzustellenden Fahrerassistenzanwendung verhindert oder die Fahrerassistenzanwendung deaktiviert wird.

11. Steuergerät (3) für ein Sensorsystem (2) eines Kraftfahrzeugs (1), wobei das Steuergerät (3) zur Kommunikation mit zumindest zwei Sensoren (4, 5) ausgebildet ist,
**dadurch gekennzeichnet, dass**
das Steuergerät (3) dazu ausgelegt ist,
- eine Anforderungsnachricht (AN) an zumindest einen der Sensoren (4, 5) zu übermitteln und hierdurch den Sensor (4, 5) dazu aufzufordern, eine Information über einen Sensortyp (T1) des Sensors (4, 5) an das Steuergerät (3) zu übermitteln,
- eine Information über den Sensortyp (T1) des Sensors (4, 5) zu empfangen und mit einem Solltyp (A1, A2) zu vergleichen, welcher im Steuergerät (3) spezifisch für eine Position (P1 bis P6) dieses Sensors (4, 5) abgelegt ist, und
- ein Fehlersignal (FS) zu erzeugen, falls der empfangene Sensortyp (T1) von dem abgelegten Solltyp (A1, A2) abweicht.

12. Sensorsystem (2) für ein Kraftfahrzeug (1), mit zumindest einem Sensor (4, 5), insbesondere einem Ultraschallsensor, und mit einem Steuergerät (3) nach Anspruch 11.

13. Kraftfahrzeug (1) mit einem Sensorsystem (2) nach Anspruch 12.
